# EUROPÄISCHE PATENTSCHRIFT

(11) **EP 0 672 314 B1**
(45) Veröffentlichungstag und Bekanntmachung des Hinweises auf die Patenterteilung: **27.12.1996**
(21) Anmeldenummer: 94900121.8
(22) Anmeldetag: 09.11.1993
(51) Int. Cl.: H02J 7/10, H02M 3/338

(54) **ELEKTRONISCHES SCHALTNETZTEIL ZUR SPEISUNG EINES AKKUMULATORS**
ELECTRONIC COMBINATORIAL CIRCUIT COMPONENT FOR FEEDING AN ACCUMULATOR
PARTIE ELECTRONIQUE DE RESEAU COMBINATOIRE POUR CHARGER UN ACCUMULATEUR

(30) Priorität: 05.12.1992 DE 4241065
(43) Veröffentlichungstag der Anmeldung: 20.09.1995
(73) Patentinhaber: Braun Aktiengesellschaft, 60326 Frankfurt am Main (DE)
(72) Erfinder: LANG, Gerhard, D-61276 Altweilnau (DE)
(86) Internationale Anmeldenummer: EP9303136
(87) Internationale Veröffentlichungsnummer: WO9414221

(56) Entgegenhaltungen:
- EP-A- 0 162 341
- EP-A- 0 226 253
- EP-A- 0 298 556
- DE-A- 3 439 180
- DE-C- 4 122 544
- US-A- 4 965 506

## Beschreibung

Die Erfindung betrifft ein elektronisches Schaltnetzteil zur Speisung eines Akkumulators aus einer Eingangsspannungsquelle, mit einem selbstschwingenden Sperrwandler mit einem Ubertrager, dessen Primärwicklung in Reihe zur Kollektor-Emitter-Strecke eines Schalttransistors mit einem Widerstand parallel zur Eingangsspannungsquelle und dessen Sekundärwicklung in Reihe zum Akkumulator und einer Diode geschaltet ist, wobei die Basis des Schalttransistors über eine Rückkopplungsschaltung mit der Sekundärwicklung verbunden ist und an eine Steuerschaltung angeschlossen ist, die den Schalttransistor bei Erreichen einer vorgegebenen oberen Schaltspannung am Akkumulator,sperrt und bei Unterschreitung dieser Schaltspannung wieder frei gibt.

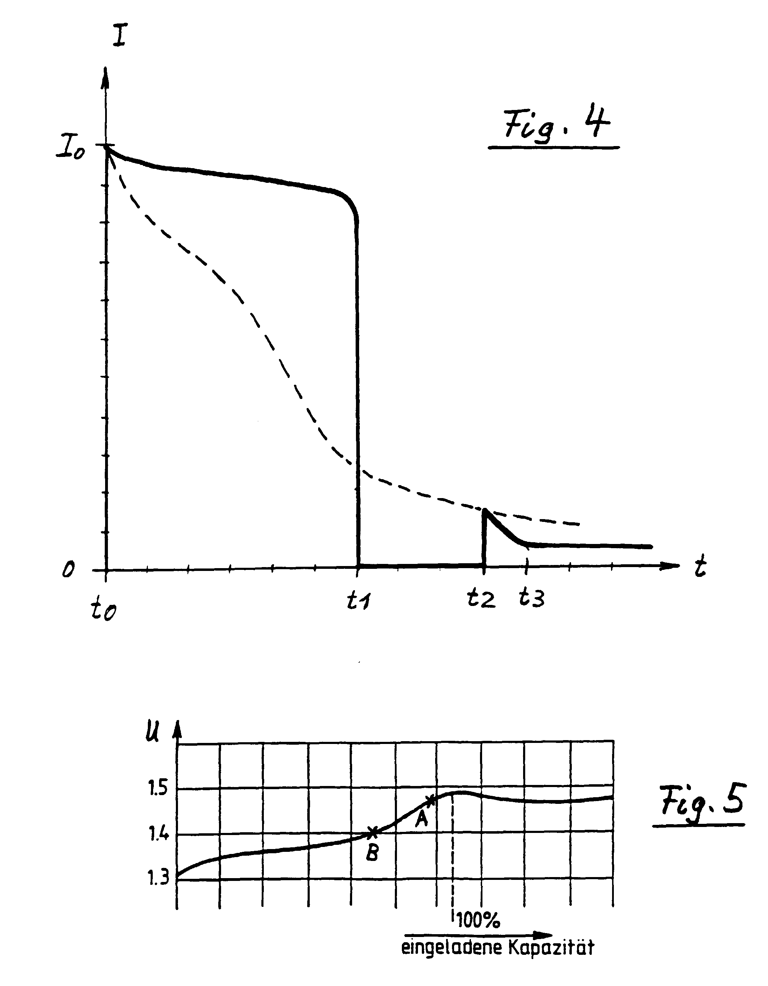

Ein solches Schaltnetzteil ist beispielsweise aus der EP 0 162 341 81 bekannt. Nach Erreichen einer bestimmten (einstellbaren) oberen Schaltspannung wird der Ladestrom durch Pulsbetrieb des Schaltnetzteils, das heißt über das Verhältnis der Dauer der Schwingungspausen zur Dauer der Schwingungspakete des Wandlers, geregelt. In Fig. 5 ist der typische Verlauf der Zellenspannung beim Laden eines Akkumulators in Abhängigkeit von der eingeladenen Kapazität dargestellt. Wenn ein leerer Akkumulator möglichst schnell geladen werden soll, muß die Schaltspannung möglichst hoch liegen. Diese Schaltspannung kann aber bei einem solchen Schaltnetzteil nicht beliebig nahe an den Hochpunkt (Buckel) der Ladekurve gelegt werden, da sonst der Erhaltungsladestrom nach Volladung des Akkumulators zu groß würde, was für den Akkumulator schädlich wäre.

Aufgabe der Erfindung ist es, ein Schaltnetzteil der eingangs genannten Art so auszugestalten, daß in möglichst kurzer Zeit eine hohe Ladung möglich ist ohne daß sich der Erhaltungsladestrom in unzulässiger Weise erhöht.

Diese Aufgabe wird dadurch gelöst, daß eine Schalteinrichtung vorgesehen ist, die die Steuerschaltung derart beeinflußt, daß die obere Schaltspannung auf eine niedrigere untere Schaltspannung herabgesetzt wird, wenn im pulsierenden Betrieb des Schaltnetzteils das Verhältnis der Dauer der Schwingungspausen zu der Dauer der Schwingungspakete eine bestimmte Größe überschreitet.

Dies hat den Vorteil, daß die obere Schaltspannung des Schaltnetzteiles so weit erhöht werden kann, daß in verhaltnismäßig kurzer Zeit mindestens ca. 80% der Ladung der Nennkapazität des Akkumulators eingelagert werden können. Durch die Auswertung des Pausen-/Pulsverhältnisses ist ein Abgleich der oberen und unteren Schaltspannung lediglich in einem stark aufgeweiteten Tolleranzfeld notwendig. Nach Herabsetzung der Schaltspannung, was das Ende der Hochstromladung bedeutet, wird das Schaltnetzteil still gelegt bis die Akkumulatorspannung die untere Schaltspannung erreicht hat. Am Ende dieser Hochstromladung ist das Ladungsannahmeverhalten des Akkumulators in Folge des Temperaturanstiegs sowieso ziemlich schlecht. Nach Abkühlen des Akkumulators wird die untere Schaltspannung erreicht und der Akkumulator wird, beginnend mit einem niedrigeren Ladestrom als vorher, vollends aufgeladen.

Die Schalteinrichtung besteht in vorteilhafter Weise aus einer Auswerteschaltung mit einem Kondensator, der während der Schwingungspausen aufgeladen und während der Dauer der Schwingungspakete entladen wird, einer Kippstufe, die nach Erreichen einer bestimmten Spannung am Kondensator umkippt und eine Einstelleinrichtung ansteuert, die die Schaltspannung der Steuereinrichtung herabsetzt.

Durch die Auswertung des Verhältnisses der Dauer der Schwingungspausen zur Dauer der Schwingungspakete kann ein definierter Ladezustand des Akkumulators angezeigt werden.

Weitere vorteilhafte Ausgestaltungen sind den übrigen Unteransprüchen und der Beschreibung entnehmbar.

Die Erfindung wird im folgenden an Hand eines in der Zeichnung dargestellten Ausführungsbeispiels näher erläutert.

Es zeigen:
- Fig. 1: ein Prinzipschaltbild eines elektronischen Schaltnetzteils mit einer Schalteinrichtung,
- Fig. 2: ein Ausführungsbeispiel eines elektronischen Schaltnetzteils der eingangs genannten Art aus der EP 0 162 341,
- Fig. 3: ein detailliertes Ausführungsbeispiel einer erfindungsgemäßen Schalteinrichtung bei Anwendung bei einem Schaltnetzteil nach Fig. 2,
- Fig. 4: den Verlauf des Ladestroms beim Laden eines Akkumulators in Abhängigkeit von der Ladezeit und
- Fig. 5: den typischen Verlauf der Zellenspannung beim Laden eines Akkumulators in Abhängigkeit von der eingeladenen Kapazität.

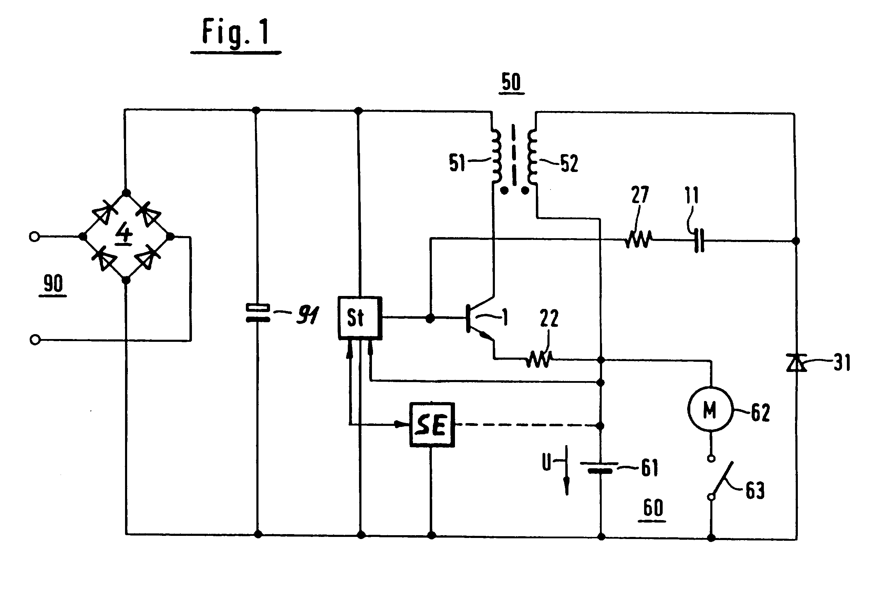

Das in Fig. 1 dargestellte Prinzipschaltbild eines elektronischen Schaltnetzteils besteht aus einem über eine Gleichrichter-Brückenschaltung 4 aus einer Gleich- oder Wechselspannungsquelle 90 gespeisten Sperrwandler. Parallel zu den Eingangs-Gleichspannungsklemmen der Gleichrichter-Brückenschaltung 4 ist ein Eingangskondensator 91 zum Sieben und Glätten der Eingangsspannung geschaltet.

Parallel zum Eingangskondensator 91 ist die Reihenschaltung der Primärwicklung 51 eines Ubertragers 50 mit der Laststrecke eines Schalttransistors 1 und eines Widerstands 22 geschaltet. Die Sekundärwicklung 52 des Ubertragers 50 ist in Reihe zu einer Diode 31 und einer Last 60 geschaltet. Die Last 60 besteht aus einem Akkumulator 61 und einem über einen Schalter 63 zuschaltbaren elektrischen Verbraucher 62, beispielsweise einem Gleichstrommotor.

Die Basis des Schalttransistors 1 ist über eine Rückkopplungsschaltung, bestehend aus der Reihenschaltung eines Rückkopplungswiderstandes 27 und eines Rückkopplungskondensators 11, mit dem einem Wicklungsende der Sekundärwicklung 52 des Ubertragers 50 und mit einer Steuerschaltung St verbunden. Die Steuerschaltung St wird von der Spannung U am Akkumulator 61 beeinflußt, das heißt bei Erreichen einer vorgegebenen Spannung U wird der Schalttransistor 1 gesperrt, so daß er nicht sofort wieder anschwingen kann, und erst nach Absinken der Spannung U wird dieser wieder freigegeben. Auf diese Weise entstehen Schwingungspakete (Zeiten, in denen der Sperrwandler schwingt) mit dazwischen liegenden Schwingungspausen. Je mehr sich der Akkumulator dem Vollzustand nähert, um so länger werden die Schwingungspausen im Vergleich zu den Schwingungspaketen.

Erreicht das Verhältnis der Dauer von Impulspausen zur Dauer von Impulspaketen eine bestimmte vorgegebene Größe, setzt eine Schalteinrichtung ES die vorgegebene (obere) Schaltspannung der Steuerschaltung St auf eine unter Schaltspannung herab und das Schaltnetzteil wird still gesetzt bis die Akkumulatorspannung U auf diese untere Schaltspannung abgesunken ist.

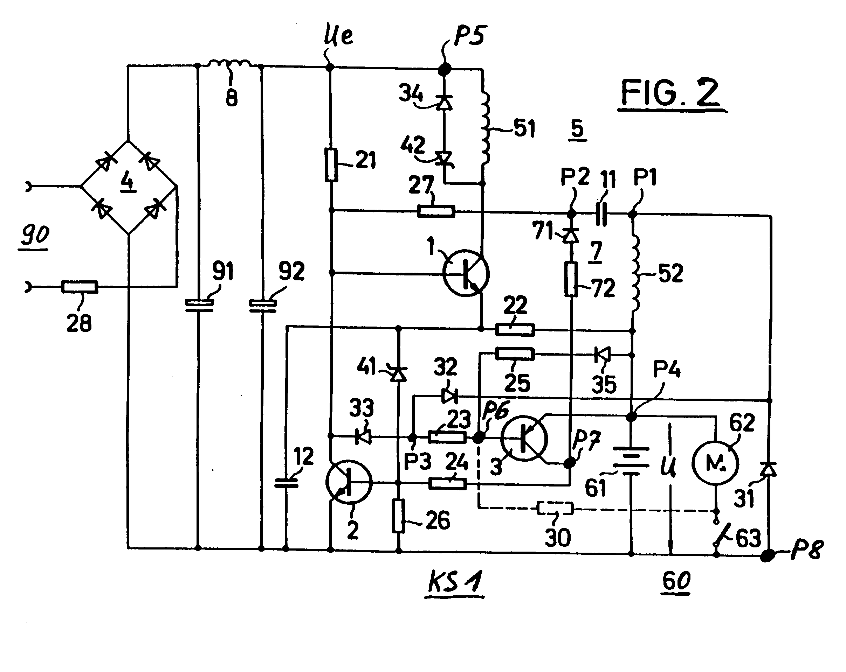

In Fig. 2 ist ein aus der EP 0 162 341 bekanntes elektronisches Schaltnetzteil dargestellt. Nach der Gleichrichtung mittels der Gleichrichter-Brückenschaltung 4 und Siebung beziehungsweise Glättung mittels der Längsdrossel 8 beziehungsweise der Querkondensatoren 91, 92 wird der als Schalttransistor arbeitende Transistor 1 über den Widerstand 21 mit einem geringen Basistrom angesteuert.

In Folge des einschaltenden Transistors 1 entsteht über die Schaltstrecke des Transistors 1 und die Primärwicklung 51 des Ubertragers 50 ein Mitkopplungseffekt, durch den der Transistor 1 zusätzlich angesteuert und in den leitenden Zustand geschaltet wird. Der Kollektorstrom steigt linear an und erzeugt am Widerstand 22 eine proportionale Spannung. Beim Erreichen eines bestimmten Spitzenstromwertes wird über die Zenerdiode 41 der Transistor 2 angesteuert, gelangt dadurch in den leitenden Zustand und verbindet die Basis des Transistors 1 mit Bezugspotential beziehungsweise Masse und entzieht damit dem Transistor 1 den Basisstrom, worauf der Transistor 1 sperrt. Mit Beginn der Sperrphase wechselt die Polarität der in der Sekundärwicklung 52 des Ubertragers 50 induzierten Spannung am Anschlußpunkt P1 des Rückkopplungskondensators 11. Die im Übertrager 50 gespeicherte Energie wird damit nach dem Prinzip des Sperrwandlers über die Diode 31 an die Last 60 abgegeben.

Während des Umschwingvorgangs des Ubertragers 50 begrenzen die Diode 34 sowie die Zenerdiode 42 parallel zur Primärwicklung 51 des Ubertragers 50 die Rückschlagsspannungsspitze während der Sperrphase.

Die während der gesamten Übertragerentladephase entstehende negative Spannung am Punkt P1 gelangt über die Diode 32 an den Verbindungspunkt P3, das heißt an die Verbindung zwischen der Diode 33 und dem Widerstand 23 im Basisstromkreis des Transistors 3. In Folge dieser negativen Spannung schaltet der Transistor 3 in den leitenden Zustand.

Im Leitzustand des Transistors 1 wurde der Rückkopplungskondensator 11 über den Rückkopplungswiderstand 27 aufgeladen, wobei sich am Punkt P2 des Rückkopplungskondensators 11 eine negative Polarität ausbildete.

Diese Ladung mit negativer Polarität am Punkt P2 fließt bei geöffnetem Transistor 3 über die Entladeschaltung 7, das ist die Entladediode 71 und der Entladewiderstand 72, über die durchgeschaltete Kollektor-Emitter-Strecke des Transistors 3 zum Punkt P4, das heißt an den Pluspol des Akkumulators 61 ab, so daß auch bei niedriger Eingangsspannung (z.B. 12 Volt) der Transistor 1 am Ende der Entladephase verhätnismäßig schnell duchschalten kann, das heißt das Schaltnetzteil leicht wieder anschwingen kann.

Wenn die Akkumulatorspannung U ihren Sollwert, das ist die vorgegebene obere Abschaltspannung, erreicht hat oder diesen Sollwert überschreitet, dann bleiben die Transistoren 2 und 3 im leitenden Zustand und der Kondensator 11 ist am Punkt P1 über die Sekundärwicklung 52 des Ubertragers 5 galvanisch mit dem Pluspol des Akkumulators 61 und am Punkt P2 über den Widerstand 27 und den durchgeschalteten Transistor 2 mit Masse- bzw. Bezugspotential verbunden. Damit wird der Anschlußpunkt P2 des Rückkopplungskondensators 11 gegenüber dem Anschlußpunkt P1 erneut negativ. Die Größe dieser negativen Spannung wird von der Entladediode 71, dem Entladewiderstand 72 und dem Widerstand 27 bestimmt. Der durchgeschaltete Spannungskomparator, das heißt die durchgeschalteten Transistoren 2 und 3 verhindern so lange die Wiedereinschaltung des Transistors 1, bis die Akkumulatorspannung U den vorgegebenen Sollwert unterschreitet und damit der Komparator, das heißt die Transistoren 2 und 3, in Sperrzustand kippen. Im gesperrten Zustand der Transistoren 2 und 3 erfolgt wiederum eine Aufladung des Rückkopplungskondensators 11 über den Widerstand 21 sowie den Rückkopplungswiderstand 27 auf den summierten Spannungswert der Akkumulatorspannung U und der Basis-Emitter-Spannung des Transistors 1. Die Diode 33 entkoppelt dabei für diesen Vorgang den aus den Widerständen 23 und 25 gebildeten Spannungsteiler vom Widerstand 21. Die Diode 35, die vorzugsweise als Germaniumdiode ausgeführt ist, dient dazu, den Spannungsverlauf des Akkumulators in Abhängigkeit von der Temperatur durch die Elektronikschaltung nachzubilden. Der Sollwert der oberen Abschaltspannung wird durch den Spannungsteiler 23/25 bestimmt.

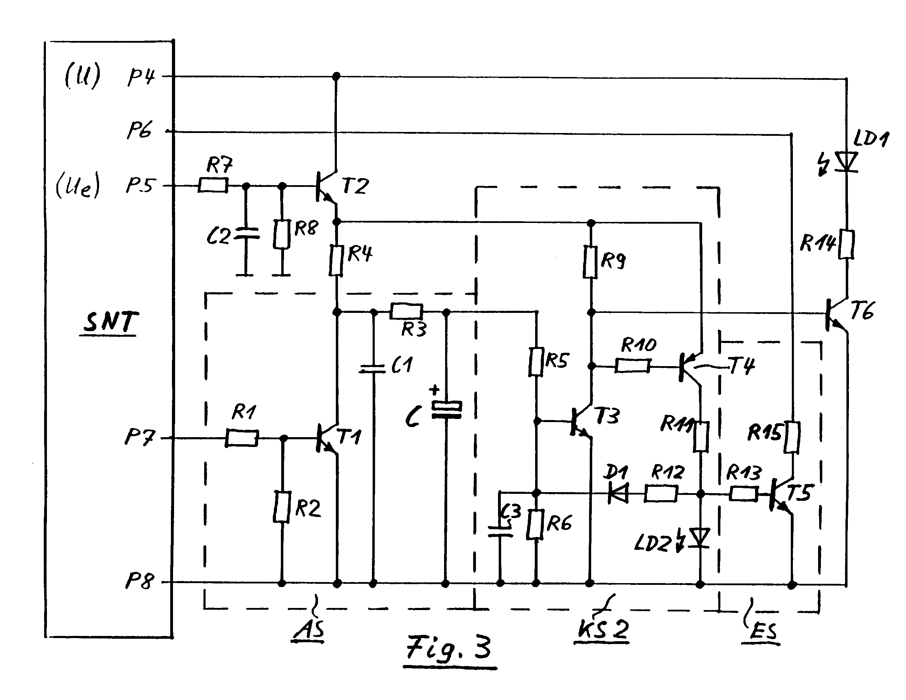

Fig. 3 zeigt ein Ausführungsbeispiel der erfindungsgemäßen Anordnung bei Anwendung auf ein Schaltnetzteil STN entsprechend Fig. 2. Der links dargestellte, mit STN bezeichnete Kasten soll das in Fig. 2 dargestellte Schaltnetzteil beinhalten, wobei die Anschlußpunkte entsprechend gekennzeichnet sind.

Die gleichgerichtete Eingangsspannung Ue (Anschlußpunkt P5 in Fig. 2) wird über einen Widerstand R7 der Basis eines Transistors T2 in Fig. 3 zugeführt, dessen Kollektor-Emitter-Strecke eine Auswerteschaltung AS und eine Kippschaltung KS2 mit dem Pluspol des Akkumulators (Anschlußpunkt P4) in Fig. 2 verbindet. Die Basis des Transistors T2 ist außerdem über die Parallelschaltung eines Widerstands R8 und eines Kondensators C2 mit Bezugspotential verbunden, das dem Anschlußpunkt P8 in Fig. 2 entspricht. Der Transistor T2 ist über den Widerstandsteiler R7/R8 nur durchgeschaltet, wenn der Netzstecker gesteckt ist, so daß die Auswerteschaltung AS und die Kippstufe KS2 nur bei gestecktem Netzstecker am Akkumulator liegen, um bei gezogenem Netzstecker keine unnötige Stromentnahme aus dem Akkumulator 61 zu verursachen. Der Kondensator C2 dient zur Siebung von auftretenden Spannungsspitzen aus dem Netz.

Der Eingang der Auswerteschaltung AS in Fig. 3 liegt am Punkt P7 in Fig. 2 und wird über einen Spannungsteiler R1/R2 der Basis eines Transistors T1 zugeführt, dessen Kollektor über einen Widerstand R4 mit dem Emitter des Transistors T2 und dessen Emitter mit Bezugspotential verbunden ist. Der Kollektor des Transistors T1 liegt außerdem über einen Widerstand R3 an dem einen Ende eines Kondensators C, dessen anderes Ende mit Bezugspotential verbunden ist, und ist über einen Kondensator C1 direkt mit Bezugspotential verbunden. Der Kondensator C1 dient zur Siebung des am Kollektor des Transistors T1 anliegenden Signals. Der Pluspol des Kondensators C, dessen Spannungspotential das Maß für das Verhältnis der Dauer der Schwingungspausen zu der Dauer der Schwingungspakete des Schaltnetzteils darstellt, ist dem Eingang einer Kippstufe KS2 zugeführt.

Die Kippstufe KS2 besteht im wesentlichen aus den Transistoren T3 und T4. Das Pluspotential des Kondensators C wird über einen Spannungsteiler R5/R6 der Basis des Transistors T3 zugeführt wobei dem Widerstand R6 ein Kondensator C3 nach Bezugspotential parallel geschaltet ist. Der Kondensator C3 dient zur Siebung. Der Kollektor des Transistors T3 ist über einen Widerstand R9 mit dem Emitter des Transistors T2 und über einen Widerstand R10 mit der Basis des Transistors T4 verbunden. Der Emitter des Transistors T4 ist direkt mit dem Emitter des Transistors T2 verbunden, der Kollektor des Transistors T4 ist über einen Widerstand R11 und eine Leuchtdiode LD2 mit Bezugspotential verbunden.

Solange der Wandler schwingt, das heißt während der Dauer von Impulspaketen, ist das Potential am Anschlußpunkt P7 in Fig. 2 durchschnittlich (über die Zeit integriert) positiver als während des Auftretens von Impulspausen. Der Basisspannungsteiler R1/R2 des Transistors T1 in Fig. 3 ist so dimensioniert, daß der Transistor T1 während des Auftretens von Impulspaketen durchgeschaltet ist und in Schwingungsspausen sperrt. Während der Schwingungsspausen wird der Kondensator C über den durchgeschalteten Transistor T2 und die Widerstände R4 und R3 aufgeladen (Transistor T2 ist immer durchgeschaltet, solange der Netzstecker gesteckt ist), da der Transistor T1 gesperrt ist, und während der Dauer des Auftretens von Impulspaketen wird der Kondensator C über den Widerstand R3 und den durchgeschalteten Transistor T1 rasch entladen. Der Widerstand R3 ist im Vergleich zu dem Widerstand R4 niederohmig (beispielsweise ist R4 ca. 20 x R3.

Mit zunehmender Ladung des Akkumulators nehmen die Betriebspausen (Schwingungspausen) des Wandlers zu und die Spannung am Kondensator C steigt an. Beim Erreichen einer bestimmten Spannung am Kondensator C, das heißt ab Überschreiten einer bestimmten Größe des Verhältnisses der Dauer der Schwingungspausen zur Dauer der Schwingungspakete, wird der Transistor T3 der Kippstufe KS2 über den Basisspannungsteiler R5/R6 durchgeschaltet. Dieser Basisspannungsteiler R5/R6 ist gleichzeitig auch Entladewiderstand für den Kondensator C bei dessen Aufladung, ist aber etwa zehn Mal größer als der eigentliche Entladewiderstand R3. Mit dem Leitendwerden des Transistors T3 schaltet auch der Transistor T4 der Kippstufe KS2 durch und die Leuchtdiode LD2 beginnt zu leuchten. Über den Rückkopplungswiderstand R12 und die Entkopplungsdiode D1 wird der Transistor T3 leitend gehalten. Da der Spannungsabfall der Leuchtdiode LD2 ca. 2,3 Volt beträgt, wird der Transistor T3 hierdurch über seine Basis so fest verriegelt, daß er nicht wieder zurückkippen kann.

Der durchgeschaltete Transistor T4 der Kippstufe KS2 bewirkt auch die Durchschaltung des Transistors T5 der Einstelleinrichtung ES, so daß über den Anschlußpunkt P6 der Widerstand R15 in Fig. 3 dem Widerstand 23 in Fig. 2 nach Bezugspotential parallel geschaltet wird, wodurch die ursprüngliche obere Schaltspannung (A) nun auf eine niedrige untere Schaltspannung (B) herabgesetzt wird (vgl. Fig. 5).

Mit Hilfe einer Schaltungsanordnung entsprechend Fig. 3 kann die obere Schaltspannung A bei einem Schaltnetzteil nach Fig. 2 bis kurz vor den Buckel auf der Ladekennlinie in Fig. 5, beispielsweise auf 2,95 Volt bei einem zweizelligen Akkumulator, gelegt werden. Der Ladestrom verläuft dann etwa wie in der durchgezogenen Kurve in Fig. 4 dargestellt. Zum Zeitpunkt tl wird die Schaltspannung auf den Punkt B (Fig. 5), beispielsweise 2,8 Volt, herabgesetzt, wodurch das Schaltnetzteil stillgesetzt wird. Die gestrichelte Kurve in Fig. 4 zeigt etwa den Verlauf des Ladestroms eines Schaltnetzteils nach Fig. 2 ohne eine Anordnung entsprechend Fig. 3.

In der auf den Zeitpunkt tl in Fig. 4 folgenden Pause kühlt nun der Akkumulator ab und die Akkumulatorspannung U sinkt. Nach beispielsweise ca. 10-20 Minuten (Zeitpunkt t2) wird die untere Schaltspannung B (2,8 Volt) der Akkumulatorspannung erreicht und das Schaltnetzteil beginnt wieder einzuschalten. Der Akkumulator wird nun vollends aufgeladen. Die Höhe des Nachladestromes richtet sich nach dem Bedarf der noch fehlenden Kapazität, ist aber in Folge der herabgesetzten Schaltspannung B in jedem Fall kleiner als vorher. Es bilden sich wie vorher abwechselnd Schwingungspausen und Schwingungspakete. Zum Zeitpunkt t3 sind die Schwingungspausen im Verhältnis zu den Schwingungspaketen so groß, daß nur noch der Erhaltungsladestrom fließt. Der Akkumulator ist vollgeladen.

Dieser Zustand bleibt erhalten, das heißt die Transistoren T3 und T4 der Kippstufe KS2 sowie der Transistor T5 bleiben durchgeschaltet, und damit die untere Schaltspannung B aktiv, bis der Netzstecker gezogen wird oder der elektrische Verbraucher 62 (Gleichstrommotor) mittels des Schalters 63 zugeschaltet wird.

Wird das Schaltnezteil vom Netz getrennt und erneut wieder mit diesem verbunden, ist die Kippstufe KS2 zurückgekippt, der Transistor T5 wird wieder gesperrt und damit die höhere Schaltspannung A wieder aktiv. Durch erneute Auswertung des Pausen-/Puls-Verhältnisses des Schaltnetzteils wird die Ladung, ohne vorherige Entladung nun nach kurzer Zeit, wie oben beschrieben wieder abgeschaltet. Das Netzstecken kann beliebig oft wiederholt werden, ohne daß der Akkumulator überladen wird.

Ein wesentlicher Vorteil besteht auch darin, daß durch die Auswertung des Pausen-/Puls-Verhältnisses ein definierter Ladezustand des Akkumulators angezeigt werden kann. Hierzu ist in Fig. 3 zwischen dem Anschlußpunkt P4 in Fig. 2 (Pluspol des Akkumulators) und Bezugspotential die Reihenschaltung einer Leuchtdiode LD1, eines Widerstands R14 und die Hauptstromstrecke eines Transistors T6 angeordnet. Die Basis des Transistors T6 ist an den Kollektor des Transistors T3 der Kippstufe KS2 geführt, so daß der Transistor T6 durchgeschaltet ist und damit die Leuchtdiode LD1 brennt, solange der Transistor T3 gesperrt ist, das heißt die Hochstromladung andauert. Da während dieser Phase auch der Transistor T4 gesperrt bleibt, ist die Leuchtdiode LD2 in der Hauptstromstrecke des Transistor T4 erloschen. Wenn zum Zeitpunkt tl die Hochstromladephase zu Ende ist und die Kippstufe KS2 umkippt, verlöscht die Leuchtdiode LD1 und die Leuchtdiode LD2 beginnt zu brennen.

## Patentansprüche

1. Elektronisches Schaltnetzteil zur Speisung eines Akkumulators (61) aus einer Eingangsspannungsquelle (90), mit einem selbstschwingenden Sperrwandler mit einem Ubertrager (50), dessen Primärwicklung (51) in Reihe zur Kollektor-Emitter-Strecke eines Schalttransistors (1) mit einem Widerstand (22) parallel zur Eingangsspannungsquelle (90) und dessen Sekundärwicklung (52) in Reihe zum Akkumulator (61) und einer Diode (31) geschaltet ist, wobei die Basis des Schalttransistors (1) über eine Rückkopplungsschaltung (11, 27) mit der Sekundärwicklung (52) verbunden ist und an eine Steuerschaltung (St) angeschlossen ist, die den Schalttransistor (1) bei Erreichen einer vorgegebenen oberen Schaltspannung (A) am Akkumulator (61) sperrt und bei Unterschreitung dieser Schaltspannung (A) wieder freigibt,
**dadurch gekennzeichnet**,
daß eine Schalteinrichtung (SE) vorgesehen ist, die die Steuerschaltung (St) derart beeinflußt, daß die obere Schaltspannung (A) auf eine niedrigere untere Schaltspannung (B) herabgesetzt wird, wenn im pulsierenden Betrieb des Schaltnetzteils das Verhältnis der Dauer der Schwingungspausen zu der Dauer der Schwingungspakete eine bestimmte Größe überschreitet.

2. Elektronisches Schaltnetzteil nach Anspruch 1,
**dadurch gekennzeichnet**,
daß die Schalteinrichtung (SE) aus einer das Verhältnis der Dauer der Schwingungspausen zu der Dauer der Schwingungspakete erkennden Auswerteschaltung (AS), aus einer Kippstufe (KS2) und aus einer Einstelleinrichtung (ES) besteht, wobei die Schalteinrichtung (SE) die Kippstufe (KS2) in ihren anderen Zustand kippt, wenn das Verhältnis der Dauer der Schwingungspausen zu der Dauer der Schwingungspakete die festgelegte Größe erreicht hat, und die Kippstufe (KS2) die Einstelleinrichtung (ES) derart ansteuert, daß die Schaltspannung der Steuerschaltung (St) auf den unteren Wert (B) herabgesetzt wird, wodurch die Hochstromladung beendet ist.

3. Elektronisches Schaltnetzteil nach Anspruch 2,
**dadurch gekennzeichnet**,
daß die Auswerteschaltung (AS) aus einem ersten Transistor (T1) und einem Kondensator (C) besteht, wobei der Kondensator (C) in den Schwingungspausen über einen ersten Widerstand (R4) vom Akkumulator (61) aufgeladen wird und während der Dauer der Schwingungspakete über einen zweiten Widerstand (R3) über den durchgeschalteten ersten Transistor (T1) entladen wird.

4. Elektronisches Schaltnetzteil nach Anspruch 2,
**dadurch gekennzeichnet**,
daß die Kippstufe (KS2) aus einem zweiten und einem dritten Transistor (T3, T4) besteht, die bei Erreichen der festgelegten Größe des Verhältnisses Schwingungspausen zu Schwingungspakete leitend gesteuert und in diesem Zustand gehalten werden, bis das Schaltnetzteil von der Eingangsspannungsquelle (90) getrennt wird oder dem Akkumulator (61) ein Verbraucher (62) parallel geschaltet wird.

5. Elektronisches Schaltnetzteil nach Anspruch 2,
**dadurch gekennzeichnet**,
daß die Einstelleinrichtung (ES) aus einem vierten Transistor (T5) und einem dritten Widerstand (R15) besteht, wobei dieser vierte Transistor (T5) so angesteuert wird, daß der dritte Widerstand (R15) dem einen Widerstand (23) eines die obere Schaltspannung (A) bestimmenden Spannungsteilers (25/23) parallel geschaltet wird.

6. Elektronisches Schaltnetzteil nach Anspruch 1,
**dadurch gekennzeichnet**,
daß eine erste Anzeigeeinrichtung (LD1, T6) angesteuert wird, wenn die obere Schaltspannung (A) aktiv ist.

7. Elektronisches Schaltnetzteil nach Anspruch 1,
**dadurch gekennzeichnet**,
daß eine zweite Anzeigeeinrichtung (LD2) angesteuert wird, wenn die untere Schaltspannung (B) aktiv ist.

8. Elektronisches Schaltnetzteil nach Anspruch 6,
**dadurch gekennzeichnet**,
daß die erste Anzeigeeinrichtung aus der Serienschaltung einer ersten Leuchtdiode (LD1) und der Hauptstromstrecke eines fünften Transistors (T6) besteht, die dem Akkumulator (61) parallel geschaltet ist.

9. Elektronisches Schaltnetzteil nach Anspruch 4 und 7,
**dadurch gekennzeichnet**,
daß die zweite Anzeigeeinrichtung aus einer zweiten Leuchtdiode (LD2) besteht, die der Hauptstromstrecke des dritten Transistors (T4) in Serie geschaltet ist.

10. Elektronisches Schaltnetzteil nach Anspruch 2,
**dadurch gekennzeichnet**,
daß die Auswerteschaltung (AS) und die Kippstufe (KS2) über einen sechsten Transistor (T2) nur dann mit dem Akkumulator (61) verbunden sind, wenn die Eingangsspannungsquelle (90) angeschlossen ist.

## Claims

1. An electronic switched-mode power supply for supplying power to an accumulator (61) from an input voltage source (90), comprising a self-oscillating flyback converter having a transformer (50) whose primary winding (51), in series arrangement with the collector-emitter circuit of a switching transistor (1) and a resistor (22), is connected in parallel with the input voltage source (90), and whose secondary winding (52) is connected in series with the accumulator (61) and a diode (31), with the base of the switching transistor (1) being connected to the secondary winding (52) through a feedback circuit (11, 27) in addition to being coupled to a control circuit (St) inhibiting conduction of the switching transistor (1) when the switching voltage at the accumulator (61) has reached a predetermined upper level (A), and rendering it conducting again when the switching voltage has dropped below this level (A),
**characterized in that** a switching arrangement (SE) is provided which operates on the control circuit (St) such that the upper switching voltage (A) is lowered to a lower switching voltage (B) when, with the switched-mode power supply in the pulsed mode, the ratio of the duration of oscillation pauses to the duration of oscillation bursts exceeds a specified magnitude.

2. The electronic switched-mode power supply as claimed in claim 1,
**characterized in that** the switching arrangement (SE) is comprised of an evaluating circuit (AS) detecting the ratio of the duration of oscillation pauses to the duration of oscillation bursts, a trigger circuit (KS2) and an adjusting device (ES), wherein the switching arrangement (SE) causes the trigger circuit (KS2) to pass to the other condition when the ratio of the duration of oscillation pauses to the duration of oscillation bursts has reached the predetermined magnitude, and wherein the trigger circuit (KS2) drives the adjusting device (ES) such that the switching voltage of the control circuit (St) is lowered to the lower value (B), thereby terminating the high-current charging period.

3. The electronic switched-mode power supply as claimed in claim 2,
**characterized in that** the evaluating circuit (AS) is comprised of a first transistor (T1) and a capacitor (C), with the capacitor (C) being charged by the accumulator (61) during the oscillation pauses through a first resistor (R4), being discharged during the occurrence of the oscillation bursts through a second resistor (R3) through the conducting first transistor (T1).

4. The electronic switched-mode power supply as claimed in claim 2,
**characterized in that** the trigger circuit (KS2) is comprised of a second and a third transistor (T3, T4) which are driven into conduction when the ratio of oscillation pauses to oscillation bursts has reached the predetermined magnitude, this condition being maintained until the switched-mode power supply is disconnected from the input voltage source (90) or until a load (62) is connected in parallel with the accumulator (61).

5. The electronic switched-mode power supply as claimed in claim 2,
**characterized in that** the adjusting device (ES) is comprised of a fourth transistor (T5) and a third resistor (R15), wherein the fourth transistor (T5) is driven such that the third resistor (R15) is connected in parallel with the one resistor (23) of a voltage divider (25/23) determining the upper switching voltage (A).

6. The electronic switched-mode power supply as claimed in claim 1,
**characterized in that** a first annunciating device (LD1, T6) is driven when the upper switching voltage (A) is active.

7. The electronic switched-mode power supply as claimed in claim 1,
**characterized in that** a second annunciating device (LD2) is driven when the lower switching voltage (B) is active.

8. The electronic switched-mode power supply as claimed in claim 6,
**characterized in that** the first annunciating device is comprised of the series arrangement of a first light-emitting diode (LD1) and the main current path of a fifth transistor (T6), which arrangement is connected in parallel with the accumulator (61).

9. The electronic switched-mode power supply as claimed in claim 4 and claim 7,
**characterized in that** the second annunciating device is comprised of a second light-emitting diode (LD2) connected in series with the main current path of the third transistor (T4).

10. The electronic switched-mode power supply as claimed in claim 2,
**characterized in that** the evaluating circuit (AS) and the trigger circuit (KS2) are connected to the accumulator (61) through a sixth transistor (T2) only when the input voltage source (90) is connected.

## Revendications

1. Alimentation électronique à découpage pour charger un accumulateur (61) à partir d'une source de tension d'entrée (90), comprenant un convertisseur auto-oscillant à phase bloquée possédant un transformateur (50) dont l'enroulement primaire (51) est monté - en série avec l'espace collecteur-émetteur d'un transistor de commutation (1) et avec une résistance (22) - en parallèle avec la source de tension d'entrée (90) et dont l'enroulement secondaire (52) est monté en série avec l'accumulateur (61) et une diode (31), la base du transistor de commutation (1) étant reliée à travers un circuit de rétroaction (11, 27) à l'enroulement secondaire (52) et raccordée à un circuit de commande (St) qui bloque le transistor de commutation (1) lorsqu'une tension de coupure supérieure préfixée (A) est atteinte sur l'accumulateur (61) et autorise de nouveau la mise en conduction de ce transistor lorsque la tension sur l'accumulateur descend au-dessous de cette tension de coupure (A), caractérisée en ce qu'elle comprend un dispositif de couplage abaisseur (SE) qui agit sur le circuit de commande (St) de manière que la tension de coupure supérieure (A) soit réduite à une tension de coupure inférieure (B) plus basse lorsque, pendant le régime pulsé de l'alimentation à découpage, le rapport de la durée des arrêts d'oscillation à la durée des paquets d'oscillations dépasse une grandeur déterminée.

2. Alimentation électronique à découpage selon la revendication 1, caractérisée en ce que le dispositif abaisseur (SE) est composé d'un circuit d'exploitation (AS) détectant le rapport de la durée des arrêts d'oscillation à la durée des paquets d'oscillations, d'une bascule (KS2) et d'un dispositif d'ajustement (ES), le dispositif abaisseur (SE) faisant passer la bascule (KS2) à son autre état lorsque le rapport de la durée des arrêts d'oscillation à la durée des paquets d'oscillations a atteint la grandeur déterminée, et la bascule (KS2) commandant alors le dispositif d'ajustement (ES) de manière que la tension de coupure du circuit de commande (St) soit réduite à la valeur inférieure (B), ce qui met fin à la charge à courant élevé.

3. Alimentation électronique à découpage selon la revendication 2, caractérisée en ce que le circuit d'exploitation (AS) est composé d'un premier transistor (T1) et d'un condensateur (C), ce condensateur (C) étant chargé par l'accumulateur (61), à travers une prémière résistance (R4), pendant les arrêts d'oscillation, et étant déchargé à travers une deuxième résistance (R3) et à travers le premier transistor (T1), rendu conducteur, pendant la durée des paquets d'oscillations.

4. Alimentation électronique à découpage selon la revendication 2, caractérisée en ce que la bascule (KS2) est composée d'un deuxième et d'un troisième transistor (T3, T4) qui, lorsque la grandeur déterminée du rapport des arrêts d'oscillation aux paquets d'oscillations est atteinte, sont rendus conducteurs et maintenus dans cet état jusqu'à ce que l'alimentation à découpage soit séparée de la source de tension d'entrée (90) ou jusqu'à ce qu'un appareil consommateur (62) soit connecté en parallèle avec l'accumulateur (61).

5. Alimentation électronique à découpage selon la revendication 2, caractérisée en ce que le dispositif d'ajustement (ES) est composé d'un quatrième transistor (T5) et d'une troisième résistance (R15), ce quatrième transistor (T5) étant commandé de manière que la troisième résistance (R15) soit connectée en parallèle avec une résistance (23) d'un diviseur de tension (25/23) déterminant la tension de coupure supérieure (A).

6. Alimentation électronique à découpage selon la revendication 1, caractérisée en ce qu'un premier dispositif d'affichage (LD1, T6) est commandé lorsque la tension de coupure supérieure (A) est active.

7. Alimentation électronique à découpage selon la revendication 1, caractérisée en ce qu'un second dispositif d'affichage (LD2) est commandé lorsque la tension de coupure inférieure (B) est active.

8. Alimentation électronique à découpage selon la revendication 6, caractérisée en ce que le premier dispositif d'affichage est formé du montage en série d'une première diode électroluminescente (LD1) et du circuit de courant principal d'un cinquième transistor (T6) qui est monté en parallèle avec l'accumulateur (61).

9. Alimentation électronique à découpage selon les revendications 4 et 7, caractérisée en ce que le second dispositif d'affichage est formé d'une seconde diode électroluminescente (LD2) montée en série avec le circuit de courant principal du troisième transistor (T4).

10. Alimentation électronique à découpage selon la revendication 2, caractérisée en ce que le circuit d'exploitation (AS) et la bascule (KS2) sont seulement reliés à l'accumulateur (61), à travers un sixième transistor (T2), lorsque la source de tension d'entrée (90) est raccordée.
